# EUROPEAN PATENT APPLICATION

(11) **EP 3 336 210 A1**
(43) Date of publication of application: **20.06.2018**
(21) Application number: 16835216.9
(22) Date of filing: 10.08.2016
(51) Int. Cl.: C22C 19/05, B22F 1/00, B22F 3/105, B22F 3/16, B33Y 70/00

(54) **NI-BASED SUPER ALLOY POWDER FOR LAMINATE MOLDING**

(30) Priority: 12.08.2015 JP 2015159329
(71) Applicant: Sanyo Special Steel Co., Ltd., Himeji-shi, Hyogo 672-8677 (JP)
(72) Inventor: NAGATOMI Yuichi, Himeji-shi Hyogo 672-8677 (JP); NISHIKAWA Shunichiro, Himeji-shi Hyogo 672-8677 (JP); SAWADA Toshiyuki, Himeji-shi Hyogo 672-8677 (JP)
(74) Representative: Potter Clarkson LLP
(86) International application number: PCT/JP2016/073614
(87) International publication number: WO 2017/026519

(57) **Abstract**

The present invention provides a Ni-based superalloy powder for use in additive manufacturing, comprising, on the basis of mass %: 0 to 0.2% C; 0.05 to 1.0% Si; 0.05 to 1.0% Mn; 10.0 to 25.0% Cr; 0.01 to 10% Fe; 0.1 to 8.0% Al; 0.1 to 8.0% Ti; 0.002% or less S and/or 0.10% or less N; and the balance being Ni and incidental impurities. The Ni-based superalloy powder of the invention allows production of a good sintered body even during sintering by a rapid melting-rapid solidification process, such as additive manufacturing.

## Description

### TECHNICAL FIELD

The present invention relates to Ni-based superalloy powder for use in additive manufacturing.

### BACKGROUND ART

Three-dimensional shaped articles have been conventionally manufactured by irradiation of a powder material with a laser or electron beam (such a method is referred to as powder bed fusion). For example, JP4661842B2 (Patent Document 1) discloses a method of manufacturing a metal powder for use in a direct metal laser sintering for a three-dimensional shaped article involving irradiation of a metal powder layer with a light beam to form a sintered layer, wherein the metal powder contains Fe and one or more materials selected from the group consisting of Ni, Ni-based alloys, Cu, Cu-based alloys, and graphite.

Powders for use in the powder bed fusion include Ni-based superalloy powders. For example, JP5579839B2 (Patent Document 2) discloses a Ni-based superalloy produced by adding metals such as Ti and Al and performing a heat-treatment for precipitation of an intermetallic compound. Such Ni-based superalloys have high heat resistance and are used in a casted or forged form in aerospace applications, such as materials for engine parts. They cannot be readily processed, and thus are processed by powder bed fusion to allow near-net shape manufacturing of the parts.

### CITATION LIST

### PATENT DOCUMENTS

Patent Document 1: JP4661842B2

### SUMMARY OF INVENTION

Unfortunately, if a Ni-based superalloy is subjected to a rapid melting-rapid solidification process, such as powder additive manufacturing, it may have internal microcracks during the step of precipitation of an intermetallic compound for higher alloy composition and heat resistance, to reduce its density and strength.

The inventors conducted extensive studies for solving the problem, and have consequently found that Ni-based superalloy adjusted to contain S and N in amounts less than those specified by the compositional standard of JIS F 4901 (S: 0.015% or less, N: not specified) allows production of a good sintered body without microcracks even in a structure sintered by a rapid melting-rapid solidification process, such as powder additive manufacturing, and arrived at the present invention.

More specifically, cracks are not caused during production of Ni-based superalloy parts from a base material by a general casting or forging process, but are caused inside parts during forming of the parts by a rapid melting-rapid solidification process. The inventors have investigated the states of the cracks, and have found that segregation and consequent concentration of impurities during solidification produces partial liquid phases, and shrinkage of the liquid phases during re-solidification causes cracks.

In a rapid solidification process, melting and solidification are repeated in a shorter time than in a general casting or forging process, and thus melting or solidification occurs before complete diffusion of impurity elements. As a result, liquid phases are formed only in areas with segregated impurity elements during solidification, and the strain between the liquid phases and the solidified areas may cause cracks. The inventors have conducted forming experiments of Ni-based superalloy to extensively study on influences by impurity contents in Ni-based superalloy on its density and strength. As a result, the inventors have found that cracks can be inhibited by controlling the Ni-based superalloy to contain 0.002% or less S and/or 0.10% or less N.

The inventors have further found that S tends to form liquid phases with a low melting point during solidification and then induce solidification cracking, and N remarkably contributes to solid solution strengthening to increase hardness of a formed product and decrease its ductility, promoting solidification cracking, in a rapid melting-rapid solidification process. Thus, the inventors have found that reductions in S and N contents in Ni-based superalloy powder are effective in view of the cause of cracking in a rapid melting-rapid solidification process, and have achieved forming of Ni-based superalloy with less cracking.

Accordingly, an object of the present invention is to provide a Ni-based superalloy powder to produce a good sintered body which is less likely to have internal cracks even during sintering by a rapid melting-rapid solidification process, such as additive manufacturing. Such a Ni-based superalloy powder can be used as a base material for additive manufacturing, regardless of the method of irradiation of high energy for sintering, and is characterized in that it has reduced contents of S and N that are impurities, which allows good forming even in a rapid melting-rapid solidification process and improved density and strength in additive manufacturing, to produce a good sintered structure.

One embodiment of the present invention provides a Ni-based superalloy powder for use in additive manufacturing, comprising, on the basis of mass %:
0 to 0.2% C;
0.05 to 1.0% Si;
0.05 to 1.0% Mn;
10.0 to 25.0% Cr;
0.01 to 10% Fe;
0.1 to 8.0% Al;
0.1 to 8.0% Ti;
0.002% or less S and/or 0.10% or less N; and
the balance being Ni and incidental impurities.

The Ni-based superalloy powder of the present invention achieves forming with less cracking even during sintering in a rapid melting-rapid solidification process.

### DESCRIPTION OF EMBODIMENTS

The reason for the compositional limitation of the Ni-based superalloy powder according to the present invention will now be described. It should be noted that amounts of the constitutional components in the following description are indicated on the basis of mass %.

S in the Ni-based superalloy powder of the invention forms liquid phases with a low melting point during solidification, to promote cracking during sintering in a rapid melting-rapid solidification process. In order to inhibit such cracking, the S content is preferably 0.002% or less, more preferably 0.0015% or less, even more preferably 0.001% or less.

N in the Ni-based superalloy powder of the invention remarkably contributes to solid solution strengthening to increase the hardness of a formed product and decrease its ductility, promoting cracking. In order to inhibit such cracking, the N content is preferably 0.10% or less, more preferably 0.08% or less, even more preferably 0.06% or less.

Si in the Ni-based superalloy powder of the invention is an element that serves as deoxidizer during melting and provides oxidation resistance at a high temperature. Thus, the Si content is 0.05% or more, but is not more than 1.0% because an excess Si content decreases oxidation resistance at high temperature. The Si content is preferably 0.1 to 0.8%, more preferably 0.2 to 0.6%.

Mn in the Ni-based superalloy powder of the invention, as with Si, is an element that serves as deoxidizer during melting, and contributes to solid solution strengthening of the alloy. Thus, the Mn content is 0.05% or more, but is not more than 1.0% because an excess Mn content decreases oxidation resistance at high temperature. The Mn content is preferably 0.1 to 0.8%, more preferably 0.2 to 0.6%.

Cr in the Ni-based superalloy powder of the invention is an essential element that contributes to solid solution strengthening and oxidation resistance of the alloy. A Cr content less than 10% is inadequate for such effects, while a Cr content more than 25% causes the formation of the δ phase to reduce the strength at high temperature and toughness. Thus, the Cr content is 10.0 to 25.0%, preferably more than 12.5% and less than 20%, more preferably 14 to 20%.

Fe in the Ni-based superalloy powder of the invention is an element effective for cost reduction as a result of substitution for Ni, and may be contained in an amount of 0.01% or more. An Fe content more than 10%, however, causes the formation of the σ phase to reduce ductility. Thus, the Fe content is 0.01 to 10%, preferably 0.01 to 8.0%, more preferably 0.01 to 6.0%.

Al in the Ni-based superalloy powder of the invention is an element that causes the formation of the γ' phase to increase the creep rupture strength and oxidation resistance, and may be contained in an amount of 0.1% or more. An Al content more than 8.0%, however, tends to cause cracking at high temperature and cracking during additive manufacturing. Thus, the Al content is 0.1 to 8.0%, preferably 0.1 to 5.0%, more preferably 0.1 to 3.0%.

Ti in the Ni-based superalloy powder of the invention, as with Al, is an element that causes the formation of the γ' phase to increase the creep rupture strength and oxidation resistance, and may be contained in an amount of 0.1% or more. A Ti content more than 8.0%, however, tends to cause cracking at high temperature and cracking during additive manufacturing. Thus, the Ti content is 0.1 to 8.0%, preferably 0.1 to 5.0%, more preferably 0.1 to 3.0%.

Mo, W, and Cu in the Ni-based superalloy powder of the invention are elements effective for enhancing the formation of solid solution and the strength, and thus may be optionally contained in an amount of 0.1% or more. Excess contents of these elements, however, promote the formation of the µ or σ phase, resulting in embrittlement. Thus, the Mo content is 12% or less, and W and Cu contents each is 10% or less. The Mo content is preferably 1.0 to 8.0%, more preferably 1.0 to 6.0%.

Co in the Ni-based superalloy powder of the invention increases the solubility of the γ' phase in Ni solid solution to improve the ductility and strength at high temperature, and thus may optionally be contained in an amount of 0.1% or more. An excess Co content, however, results in embrittlement. Thus, the Co content is 20% or less, preferably 0.1 to 15.0%, more preferably 0.1 to 10.0%.

Zr in the Ni-based superalloy powder of the invention is an element that segregates at grain boundaries to effectively increase the creep strength, and may optionally be contained in an amount of 0.01% or more. An excess Zr content, however, decreases the toughness. Thus, the Zr content is 0.2% or less, preferably 0.01 to 0.15%, more preferably 0.01 to 0.1%.

Nb and Ta in the Ni-based superalloy powder of the invention form carbides and enhance the formation of the γ' phase to increase the strength, and thus may optionally be contained in an amount of 0.1% or more. Excess Nb and Ta contents, however, form the Laves phase to decrease the strength. Thus, the contents of these elements each is 6.0% or less. The Nb content is preferably 1.2 to 6.0%, more preferably 3.0 to 6.0%.

B in the Ni-based superalloy powder of the invention serves to enhance the grain boundaries to increase the strength, and thus may optionally be contained in an amount of 0.001% or more. An excess B content, however, causes precipitation of borides to decrease toughness. Thus, the B content is 0.01% or less.

Hf in the Ni-based superalloy powder of the invention serves to increase the oxidation resistance, and thus may optionally be contained in an amount of 0.1% or more. An excess Hf content, however, forms an embrittled phase to decrease the strength and toughness. Thus, the Hf content is 2.0% or less.

C in the Ni-based superalloy powder of the invention serves to form MC carbides together with Nb, Ti or the like, and carbides, such as M₆C, M₇C₃, or M₁₂C₆, together with Cr, Mo, W or the like, to increase the strength of the resulting alloy at high temperature. Thus, the C content is 0% or more, preferably 0.001% or more. An excess C content, however, causes continuous precipitation of carbides at crystal grain boundaries to embrittle the crystal grain boundaries, decreasing the corrosion resistance and toughness. Thus, the C content is 0.2% or less, more preferably 0.03 to 0.15%, even more preferably 0.03 to 0.1%.

In the case where the hard powder of the present invention is used in additive manufacturing, it preferably has a mean particle size (D50) of 10 to 100 µm and a D90 of 150 µm or less. The mean particle size is controlled to be 10 µm or more to inhibit a decrease in powder flowability as a result of fine particle size, and to be 100 µm or less to inhibit decreases in filling ratio and density of a formed product. More preferably, the mean particle size is 10 to 90 µm, even more preferably 30 to 90 µm. Furthermore, the D90 is controlled to be 150 µm or less to inhibit sintering with a part of the powder not melted and remaining as a defect during additive manufacturing. More preferably, the D90 is 130 µm or less, even more preferably 120 µm or less.

O in the Ni-based superalloy powder of the invention forms oxides together with Fe, Ti, Al or the like, to decrease the strength and ductility. Thus, the O content is preferably 0.02% or less.

### EXAMPLES

The present invention will now be described in more details by way of the following Examples.

### (1) Preparation of Alloy Powder and Block

To produce each sample shown in Tables 1 to 3, powder containing predetermined components was prepared by gas atomization, and was classified to select that with a particle size of 63 µm or less. Gas atomization was performed as follows: raw materials were placed in an alumina crucible in a predetermined proportion and were melted by high frequency induction heating under vacuum; the melted alloy was vertically discharged from a nozzle having a diameter of 5 mm disposed at the bottom of the crucible; and then was atomized with spray of high-pressure argon or nitrogen gas. The raw material powder was thereby prepared, and was processed with a three-dimensional additive manufacturing device (EOS-M280) to form a 10 mm cube block. The resulting sample was evaluated in details for the effects of impurities S and N on cracking during forming, i.e. behaviors of the impurities S and N on the number of cracks and the relative density. The results are shown in Tables 1 to 3.

### (2) Evaluation of Cracking

The 10 mm cube block was cut in a direction parallel to the part-build orientation into test pieces. Each block was evaluated for the number of cracks in five fields (x100 magnification) in a cross section by optical micrography.

### (3) Evaluation of Relative Density

The relative density was calculated by dividing the density of each 10 mm cube block measured in accordance with the Archimedean method by the specific gravity as determined based on component analysis.

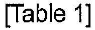

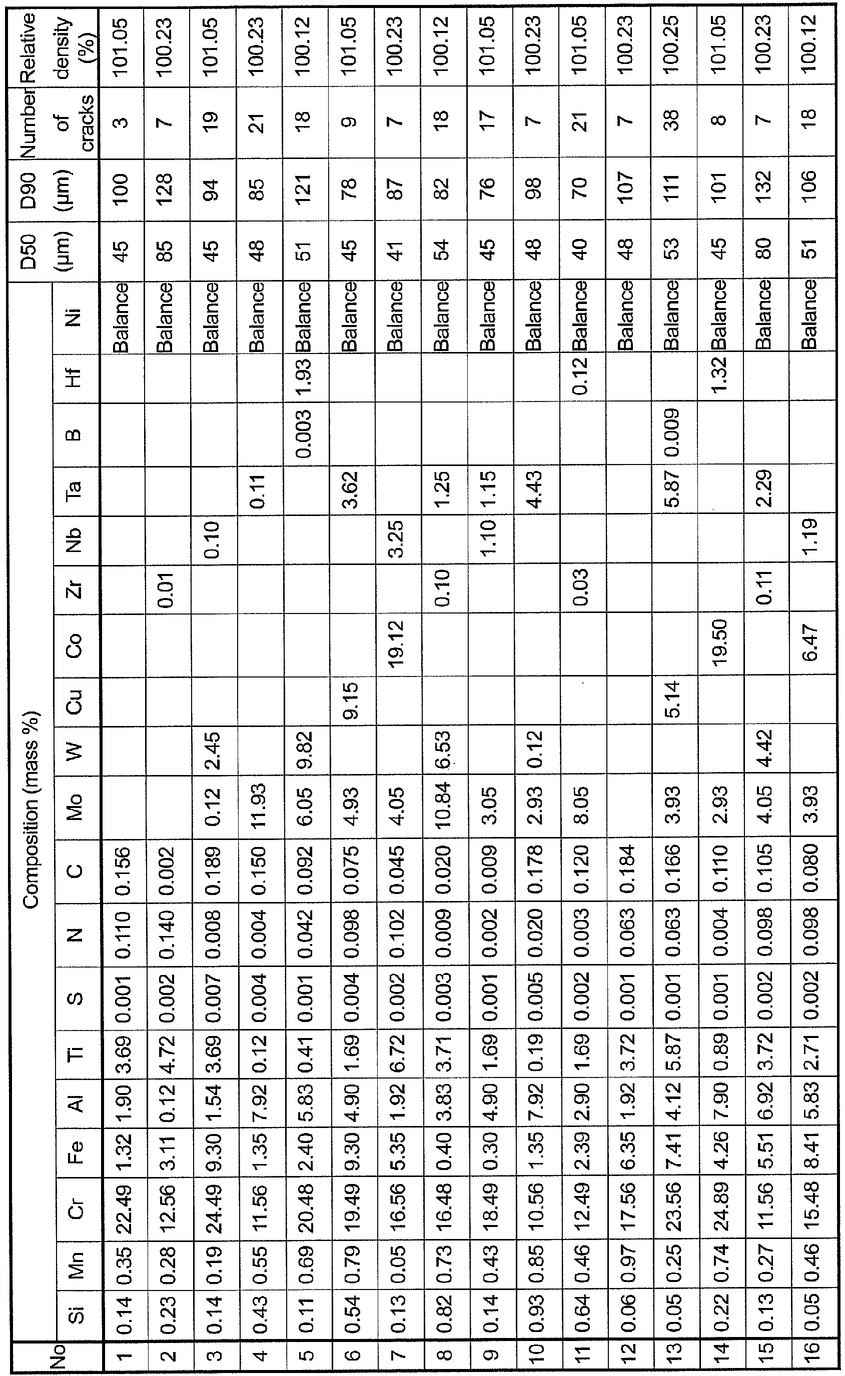

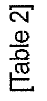

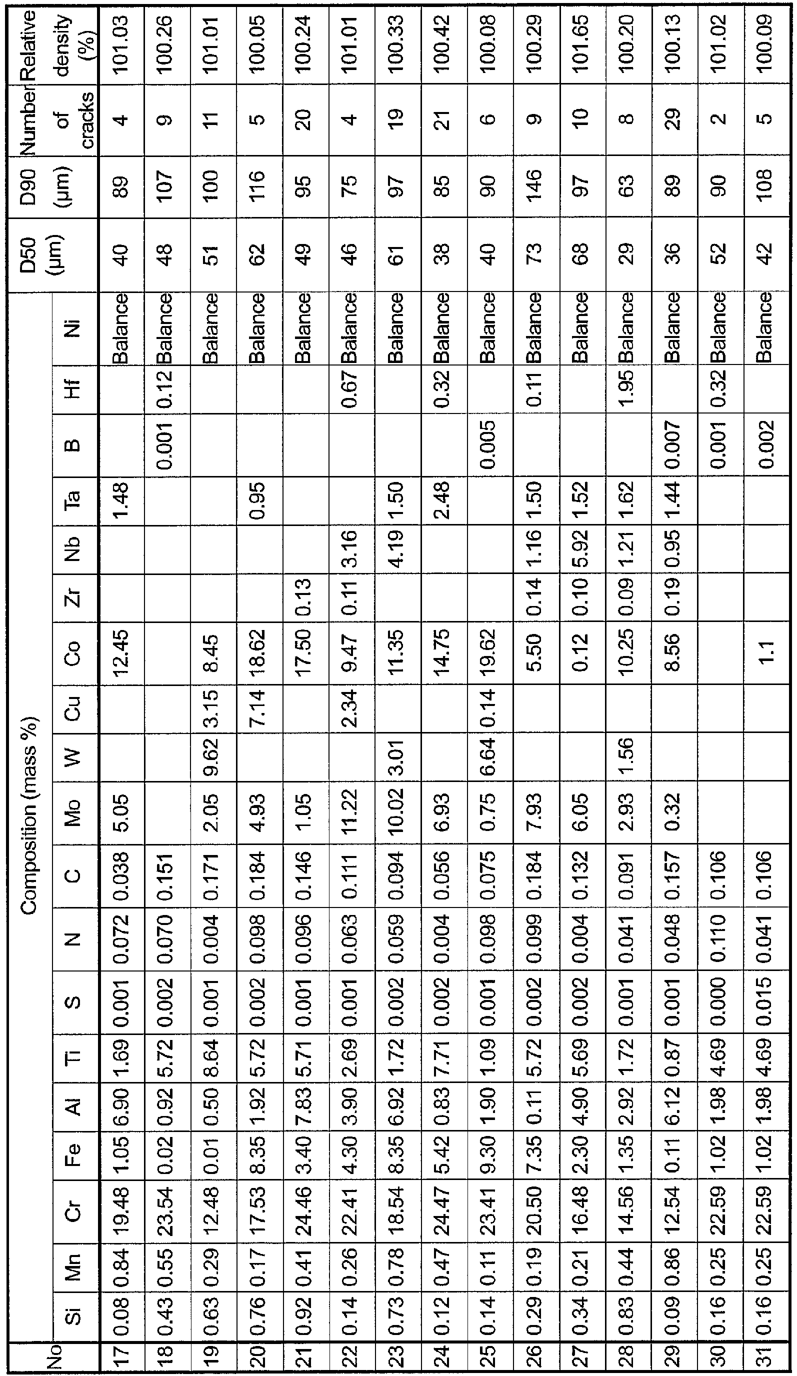

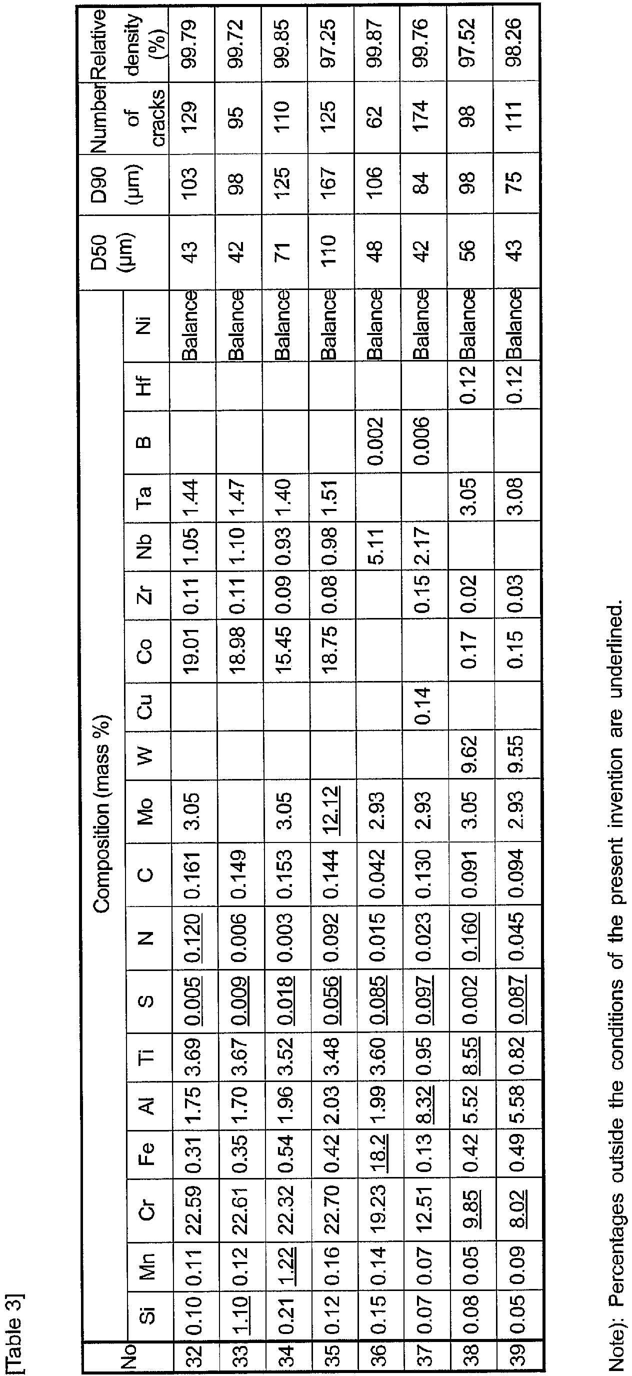

Sample 32 with high S and N contents exhibited as many as 129 cracks and a relative density of less than 100. Sample 33 with high Si and S contents exhibited as many as 95 cracks and a relative density of less than 100.

Sample 34 with high Mn and S contents exhibited as many as 110 cracks and a relative density of less than 100. Sample 35 with high Mo and extremely high S contents and a high D90 exhibited as many as 125 cracks and an extremely low relative density. Sample 36 with high Fe and S contents exhibited 62 cracks, which is a slightly large number of cracks, and a relative density of less than 100.

Sample 37 with high Al and extremely high S contents exhibited as many as 174 cracks and a relative density of less than 100. Sample 38 with a low Cr content and high Ti and N contents exhibited as many as 98 cracks. Sample 39 with a low Cr content and an extremely high S content exhibited as many as 111 cracks and a relative density of less than 100. In contrast, each of Samples 1 to 31 had few cracks and a relative density over 100.

As described above, the Ni-based superalloy powder of the present invention provides a good sintered body with few internal cracks even during sintering by a rapid melting-rapid solidification process, such as additive manufacturing. Such a Ni-based superalloy powder can be used as a base material for additive manufacturing, regardless of the method of irradiation of high energy for sintering, and is characterized in that it is controlled to have reduced contents of impurities, especially 0.002% or less S and 0.1% or less N, which inhibits cracking, allows good formed product without internal cracks, and improves the density and strength in additive manufacturing, to provide a good sintered structure.

## Claims

1. Ni-based superalloy powder for use in additive manufacturing, comprising, on the basis of mass %:
0 to 0.2% C;
0.05 to 1.0% Si;
0.05 to 1.0% Mn;
10.0 to 25.0% Cr;
0.01 to 10% Fe;
0.1 to 8.0% Al;
0.1 to 8.0% Ti;
0.002% or less S and/or 0.10% or less N; and
the balance being Ni and incidental impurities.

2. The Ni-based superalloy powder for use in additive manufacturing according to claim 1, wherein the C content is 0.001 to 0.2% on the basis of mass %.

3. The Ni-based superalloy powder for use in additive manufacturing according to claim 1 or 2, further comprising at least one element selected from the group consisting of, on the basis of mass (%):
0.1 to 12% Mo;
0.1 to 10% W;
0.1 to 10% Cu;
0.1 to 20% Co;
0.01 to 0.2% Zr;
0.1 to 6.0% Nb;
0.1 to 6.0% Ta;
0.001 to 0.01% B; and
0.1 to 2.0% Hf.

4. The Ni-based superalloy powder for use in additive manufacturing according to any one of claims 1 to 3, wherein the powder has a mean particle size (D50) of 10 to 100 µm and a D90 of 150 µm or less.
